# EUROPEAN PATENT APPLICATION

(11) **EP 3 939 949 A1**
(43) Date of publication of application: **19.01.2022**
(21) Application number: 20771084.9
(22) Date of filing: 09.03.2020
(51) Int. Cl.: C04B 35/488

(54) **CERAMIC SINTERED BODY AND CERAMIC POWDER**

(30) Priority: 11.03.2019 JP 2019044207
(71) Applicant: Kyocera Corporation, Kyoto-shi, Kyoto 612-8501 (JP); Daiichi Kigenso Kagaku Kogyo Co., Ltd., Osaka-shi, Osaka 541-0041 (JP)
(72) Inventor: NISHIHARA, Takanori, Kyoto-shi, Kyoto 612-8501 (JP); KIMURA, Hideo, Osaka-shi, Osaka 559-0025 (JP)
(74) Representative: Viering, Jentschura & Partner mbB Patent- und Rechtsanwälte
(86) International application number: PCT/JP2020/009982
(87) International publication number: WO 2020/184509

(57) **Abstract**

A ceramic sintered body of the present disclosure contains zirconia as a main component, includes a plurality of sintered body crystals and a grain boundary part located between the plurality of sintered body crystals, contains at least CeO₂, and has a content of Ce higher in the grain boundary than in a central region of the sintered body crystal.

## Description

### TECHNICAL FIELD

The present disclosure relates to a ceramic sintered body and ceramic powder containing zirconia as a main component.

### BACKGROUND

Conventionally, in various technical fields, there has been a demand for a ceramic sintered body (the one made by forming and sintering ceramic powder) having both relatively high strength and relatively high toughness. As an example of such a ceramic sintered body, Patent Document 1 below describes a ceramic sintered body suitable for artificial joints or the like.

### PRIOR ART DOCUMENTS

### PATENT DOCUMENTS

Patent Document 1: Japanese Unexamined Patent Publication No. 2005-131081

### SUMMARY

### PROBLEM TO BE SOLVED BY THE INVENTION

For example, in uses of knives or the like, a ceramic sintered body is required to have both higher strength and toughness.

### MEANS FOR SOLVING THE PROBLEM

A ceramic sintered body of the present disclosure is a ceramic sintered body containing zirconia as a main component, including a plurality of sintered body crystals and a grain boundary part located between the plurality of sintered body crystals, containing at least CeO₂ (ceria), and having a content of Ce higher in the grain boundary part than in a central region of the sintered body crystal.

The ceramic sintered body and a ceramic powder of the present disclosure includes zirconia-based compound oxide containing 75 to 95% by mass of zirconia, 5 to 25% by mass of alumina, and 0.2 to 0.4% by mass of zinc oxide when the sum of the zirconia and the alumina is 100% by mass, and partially stabilized zirconia containing Y₂O₃ (yttria) in which the zirconia is 1.5 to 2.8 mol% and partially stabilized zirconia containing 8 to 12 mol% of CeO₂, and the ratio of the partially stabilized zirconia containing Y₂O₃ to the total amount of the zirconia is 15 to 50%.

A knife according to the present disclosure includes a blade body including the above-described ceramic sintered body. Further, a jig tool according to the present disclosure includes a cutting part or a wear resistant part including the above-described ceramic sintered body.

### EFFECTS OF THE INVENTION

The ceramic sintered body of the present disclosure has high bending strength and high fracture toughness.

### BRIEF DESCRIPTION OF THE DRAWINGS

FIG. 1 is a schematic enlarged surface view of a ceramic sintered body according to an embodiment of the present disclosure.
FIG. 2 is an example of an enlarged photograph of a surface of a ceramic sintered body according to an embodiment of the present disclosure.
FIG. 3 is data showing a content ratio of each element in the ceramic sintered body shown in FIG. 2.
FIG.4 is a transmission electron microscope photograph of another part of the ceramic sintered body shown in FIG. 2.

### EMBODIMENT

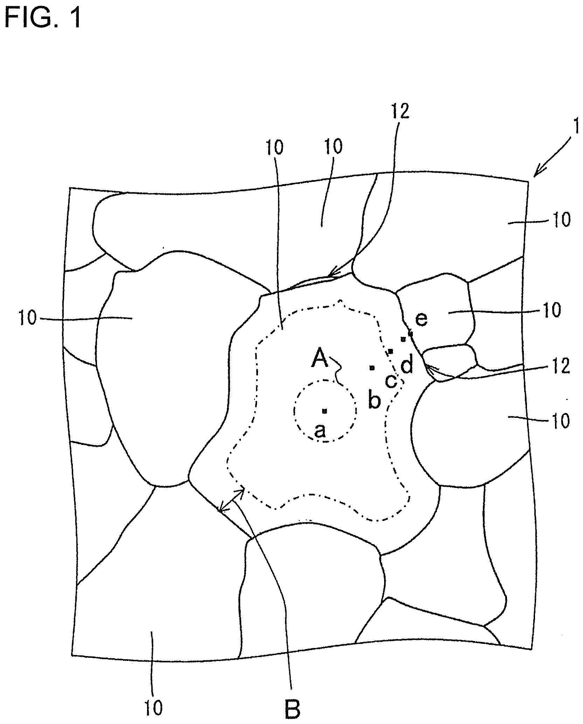

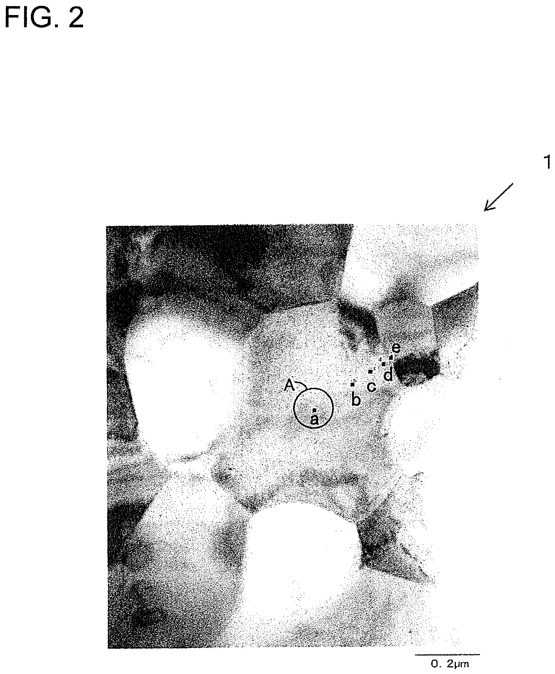

Hereinafter, an embodiment of the ceramic sintered body of the present disclosure will be described with reference to the drawings. FIG. 1 is an example of a schematic enlarged surface view of the ceramic sintered body of the present disclosure. FIG. 2 is an example of a transmission electron microscope photograph (TEM photograph) of the surface of the ceramic sintered body of the present disclosure. The enlarged surface view of FIG. 1 is drawn based on the TEM photograph of FIG. 2.

A ceramic sintered body 1 shown in FIGs. 1 and 2 (hereinafter, it may be simply referred to as a sintered body 1) contains zirconia as a main component, and has a plurality of sintered body crystals 10 and a grain boundary part 12 located between the plurality of sintered body crystals 10. The sintered body crystal 10 contains at least CeO₂, and the grain boundary part 12 has a larger content of Ce than a central region A of the sintered body crystal 10.

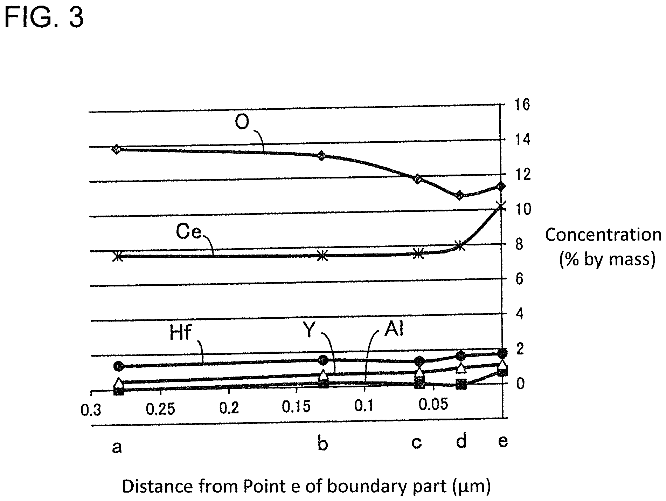

FIG. 3 is a graph showing an example of the content ratio of elements other than zirconia in the sintered body crystal 10 shown in FIG. 1. That is, FIG. 3 shows the ratio of each element measured by using an energy dispersive X-ray spectrometer (NSS300E: an EDS analyzer manufactured by Thermo Scientific) at each of the points a, b, c, d and e shown in FIGs. 1 and 2. As measurement conditions, an acceleration voltage was set to be 200 kV and a measurement Livetime was set to be 50 sec. The point a in FIGs. 1 and 2 is included in the central region A, and the point e is included in the grain boundary part 12. The other points b, c, and d are arbitrary measurement points set in this order on a straight line connecting the points a and e. It is preferable to have at least one measurement point among the points b, c and d in an end part region B shown in FIG. 1 and in a region between the end part region B and the central region A, respectively.

Specifically, the content ratio of the elements other than zirconia is such that the content of Ce of the grain boundary part 12 is 110% by mass or more, preferably 120% by mass or more, and further 150% by mass or less, preferably 140% by mass or less with respect to the content of Ce of the central region A of the sintered body crystal 10 (100% by mass).

As can be seen from the results shown in FIG. 3, quantitatively, the content of Ce required for stabilizing zirconia is large in the grain boundary part 12, while the content of Ce required for stabilizing zirconia is small in the central region A. This difference in the content indicates that there are different regions for critical stress required for stress induced transformation inside the sintered body crystal 10, and each of which has the effect of increasing strength or toughness.

That is, since the content of Ce in the grain boundary part 12 is larger than that in the central region A of the sintered body crystal 10, the stabilization of zirconia in the grain boundary part 12 proceeds. As a result, the critical stress required for the stress induced transformation becomes high, and it brings an effect of increasing the strength. On the other hand, the content of Ce required for stabilizing zirconia becomes small in the central region A. Therefore, the critical stress required for the stress induced transformation becomes low, and the toughness increases. The central region A is a region of a circle having a radius of 50% of the radius of a circumscribed circle of the sintered body crystal 10 from the center of the circumscribed circle in the electron microscope photograph.

As is clear from the results shown in FIG. 3, in the present embodiment, the content of Ce of the sintered body crystal 10 is larger in an end part region B near the grain boundary part 12 than in the central region A of the sintered body crystal 10. The end part region B is a region whose length from the grain boundary part 12 is 10% of the total length of the line segment connecting the grain boundary part 12 and the center of the central region A. The content of Ce of the grain boundary part 12 gradually increases from the central region A toward the grain boundary part 12 of the sintered body crystal 10.

This results in a continuous change in the stabilized state of zirconia from the grain boundary part 12 to the central region A of the sintered body crystal 10. As a result, the part where the critical stress required for the stress induced transformation is high and the part where the critical stress required for the stress induced transformation is low coexist in harmony, and there is an effect of achieving both the strength and the toughness of the entire ceramic sintered body.

In FIG. 1, the point a is included in the central region A, and the points c and d are included in the end part region B. The content of Ce gradually increases from the point c to the point e. As a result, in the sintered body crystal 10 of the present embodiment, a phase that contributes to the stress induced transformation in which the stabilized state of zirconia is continuously changed is formed between other crystal phases with the end part region B interposed therebetween. As a result, it has an effect of increasing resistance to fracture in crystal grains and at the origin of the crystal grain boundary, and improving the strength and the toughness value of the ceramic sintered body.

The content of Ce in the grain boundary part 12 is 8% by mass or more and 15% by mass or less. When the content of Ce of the grain boundary part 12 is in such a range, a sintered body having relatively high strength and toughness can be obtained.

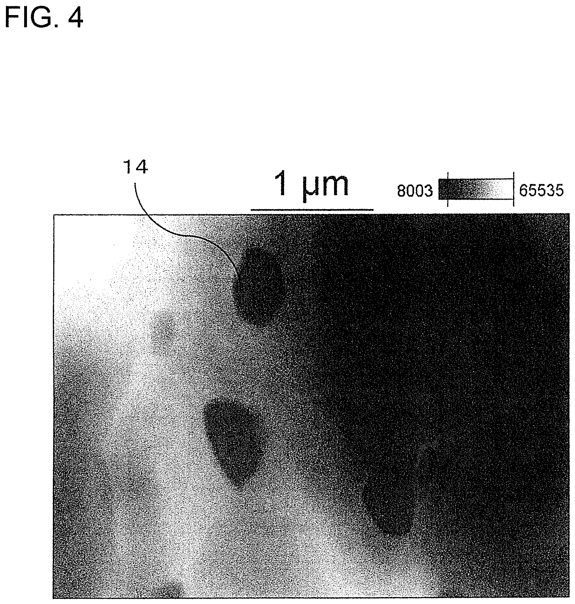

FIG. 4 is an example of a transmission electron microscope photograph of the sintered body 1 of a part different from FIG. 1. In the sintered body 1 of the present embodiment, at least one of the sintered body crystals 10 includes an alumina nanoparticle 14 inside. This has an effect of forming a nano-level grain boundary part in the zirconia of the sintered body crystal 10 and generating the above-mentioned enhancing mechanism of the strength and the toughness also in the zirconia. As a result, the strength and the toughness of the entire ceramic sintered body are improved.

The alumina nanoparticle 14 preferably has a particle size of 0.8 µm or less, more preferably 0.5 µm or less, and 0.01 µm or more. When the particle size of the nano-level alumina present in the zirconia is 0.8 µm or less, the particle size is different from the crystal particle size of other alumina. Therefore, it becomes easier to be involved in complicating a concentration mechanism of Ce in the zirconia, which is a feature of the present disclosure, and further contributes to the improvement of the strength and the toughness of the ceramic sintered body.

The sintered body 1 of the present embodiment includes zirconia-based composite oxide containing zirconia of 75 to 95% by mass, alumina of 5 to 25% by mass, and zinc oxide of 0.2 to 0.4% by mass when the sum of the zirconia and the alumina is 100% by mass. The zirconia includes a mixed phase of partially stabilized zirconia containing Y₂O₃ of 1.5 to 2.8 mol% and partially stabilized zirconia containing CeO₂ of 8 to 12 mol%, and the ratio of the partially stabilized zirconia containing Y₂O₃ is 15 to 50% of the total amount of the zirconia, that is, the entire mixed phase of the partially stabilized zirconia.

In the sintered body 1 having such a composition, a dispersion enhancing mechanism is effectively generated in the entire ceramic sintered body since the main compositions of zirconia and alumina are present at the respective concentrations. Further, the presence of zinc oxide at the above-mentioned appropriate concentration has an effect of increasing sintering density by acting as a sintering aid in the grain boundary parts of the alumina or the zirconia at the time of sintering. Since the zirconia is a mixed phase of the partially stabilized zirconia containing the predetermined Y₂O₃ and CeO₂ concentrations as described above, the partially stabilized zirconia of Y₂O₃ and the partially stabilized zirconia of CeO₂ with different critical stresses required for a stress induced transformation enhancing mechanism are present in a dispersed manner in the zirconia throughout the ceramic sintered body in a macroscopic range. As a result, it has an effect of increasing resistance response of the zirconia to fracture resistance from external stress. Zinc oxide not only acts as a sintering aid in the sintering process, but also it forms a compound of alumina and CeO₂. The stabilizers Y₂O₃ and CeO₂ of the partially stabilized zirconia are subjected to an action of balancing the concentration distribution by mutually diffusing between the zirconia phases at the time of sintering. However, when zinc oxide forms a liquid phase at the grain boundary part of the zirconia in the sintering process, chemical equilibrium occurs in the direction of forming the above compound of alumina and CeO₂, and it results in an effect of forming a region where the concentration of Ce is concentrated in the grain boundary part of the zirconia after sintering.

The sintered body 1 includes zirconia-based composite oxide (zirconia-alumina composite oxide) and zinc oxide as a sintering aid, and has a sintered density of 97.6% or higher with respect to the theoretical density when sintered at 1450°C under an atmospheric pressure. Such a sintered body 1 has a high sintering density after sintering, and has an effect of reducing structural defects in the ceramic sintered body due to voids or the like, and reducing fracture sources. As a result, such a sintered body 1 can be expected to be used as a ceramic sintered body with high reliability in terms of strength.

A fracture toughness value of the sintered body 1 is preferably 12.0 MPa·m^{0.5} or more by the IF method and 10.0 MPa·m^{0.5} or more by the SEVNB method. Such a sintered body 1 has an effect of showing high resistance to progress of internal cracks at the time of fracture, and exhibits behavior closer to that of a metal as compared with conventional ceramic sintered bodies. Therefore, it can be applied to the field of metal substitute where conventional ceramic sintered bodies could not be used due to insufficient fracture toughness values.

The sintered body 1 has the Vickers hardness HV50 of 1100 or more. Such a sintered body 1 is harder than general metal materials and has an effect of being excellent in wear resistance. Therefore, it can be applied to the field of metal substitute as described above where the wear resistance is required more than that of metal. The sintered body 1 has a bending strength value of 980 MPa or more at three-point bending fracture. Due to the effects of the various enhancing mechanisms described so far, such a sintered body 1 shows that a high strength value is maintained as compared with other ceramic sintered bodies, which is a feature that a zirconia-based ceramic sintered body originally has even after sintering in composite with each composition. Therefore, such a sintered body 1 is suitable for application to a structure of a ceramic sintered body.

Thus, since the sintered body 1 has a high fracture toughness value and a high bending strength value, when it is used for a knife or the like, sharpness lasts for a relatively long time, and it is difficult to crack. A knife including a blade body including the sintered body 1, which is an embodiment of the present disclosure, has a relatively long-lasting sharpness and is difficult to crack.

A jig tool including a cutting part or a wear resistant part including the sintered body 1, which is another embodiment of the present disclosure, is effective in improving reliability with respect to functions of jig tools that involve cutting, rotation, sliding, friction or the like, such as sliding parts of various processing devices, industrial cutters or the like.

The content of CeO₂ in the partially stabilized zirconia of CeO₂ in the zirconia is preferably 8 to 12 mol% to stabilize the zirconia as a tetragonal crystal and to suppress the precipitation of monoclinic crystals and cubic crystals. The content of Y₂O₃ in the partially stabilized zirconia of Y₂O₃ in the zirconia is preferably 1.5 to 2.8 mol% for the same reason as above.

If the content of CeO₂ in the partially stabilized zirconia of CeO₂ in the zirconia, which is the main component of the zirconia-based composite oxide in the present disclosure, is less than 8 mol%, a monoclinic crystal, which is a metastable phase, tends to precipitate. This may cause the ceramic sintered body to fracture due to volume expansion before and after the sintering process. On the contrary, if the content of CeO₂ is more than 12 mol%, cubic crystals tend to increase and the stress induced transformation mechanism of the zirconia, which is a feature of the sintered body, is not demonstrated. As a result, the bending strength, the toughness, and the hardness may decrease. The content of CeO₂ in the partially stabilized zirconia of CeO₂ in the zirconia may be 9 mol% or more and 11 mol% or less.

On the other hand, if the content of Y₂O₃ in the partially stabilized zirconia of Y₂O₃ in the zirconia is less than 1.5 mol%, the monoclinic crystal, which is the metastable phase, tends to precipitate, as with CeO₂. This may cause the ceramic sintered body to fracture due to the volume expansion before and after the sintering process. On the contrary, if the content of Y₂O₃ is more than 2.8 mol%, cubic crystals increase and the occurrence of the stress induced transformation mechanism of the zirconia, which is a feature of the sintered body, tends to be impaired in the same manner. As a result, the bending strength, the toughness, and the hardness may decrease. The content of Y₂O₃ in the partially stabilized zirconia of Y₂O₃ in the zirconia may be 1.7 mol% or more and 2.6 mol% or less.

If the proportion of the zirconia constituting the zirconia-based composite oxide in the present disclosure is less than 75% by mass and the proportion of the alumina is more than 25% by mass, the toughness of the mechanical properties may be particularly reduced. On the contrary, if the proportion of the zirconia is more than 95% by mass and the proportion of the alumina is less than 5% by mass, the concentration mechanism of the concentration of Ce, which is a feature of the ceramic sintered body, may be relatively reduced due to the reduction of alumina, and the bending strength and the Vickers hardness of the mechanical properties may be particularly reduced.

In the zirconia-based composite oxide of the present disclosure, alumina may be present at the grain boundary of the zirconia in that the alumina is involved in the concentration mechanism of Ce. Furthermore, the nano-level alumina particles generated in the zirconia at a constant rate in the sintering process may be present, as they have an effect of complicating the regions of different critical stresses of the stress induced transformation by being involved in the concentration mechanism of Ce in the zirconia.

In the zirconia-based composite oxide of the present disclosure, the content of zinc oxide is preferably in the range of 0.2 to 0.4% by weight if the sum of the zirconia and the alumina is set to be 100% by mass. If the content of zinc oxide is less than 0.2% by weight, the effect as a sintering aid is lost, and the residual pores in the ceramic sintered body tend to increase and the sintered density tends to decrease. As a result, there is a risk that reliability in terms of strength is lowered. On the other hand, if the content of zinc oxide is more than 0.4% by mass, the zinc oxide tends to promote the formation of a compound of alumina and CeO₂, resulting in the formation of a large amount of needle-like crystals in the ceramic sintered body. As a result, the presence state of the zirconia and the alumina may become heterogeneous, and the improvement of strength and toughness, which are the features of the sintered body, may be impaired.

The mean particle sizes of both zirconia and alumina of the present disclosure may be 1 µm or less, and the mean particle sizes are more preferably 0.3 to 0.8 µm in terms of increasing the bending strength and the toughness.

If the mean particle sizes of zirconia and alumina are 1 µm or less, the zirconia crystal is less likely to change from a tetragonal system to a monoclinic system, and the toughness tends to be less likely to decrease. The occasional presence of large crystals in the composite ceramic tends to cause missing of zirconia or alumina particles during the wear resistance test, and the wear resistance decreases. For this reason, the maximum crystal diameters of the zirconia and the alumina are desirable to be 2 µm or less, particularly 1.5 µm or less.

Next, a method for manufacturing the sintered body of the present disclosure will be described.

In the present disclosure, ceramic powder is first prepared, and then the powder is molded into a desired shape. The ceramic powder includes zirconia-based mixed powder in which first zirconia powder containing 8 to 12 mol% of CeO₂, second zirconia powder containing 1.5 to 2.8 mol% of Y₂O₃, alumina powder, and zinc compound are mixed. The mean particle sizes of the first and second zirconia powders and the alumina powder are preferably 1 µm or less, and particularly 0.8 µm or less. The first and second zirconia powders are mixed and used in the proportions of 50 to 85% by mass of the first zirconia powder and 15 to 50% by mass of the second zirconia powder. In particular, it is preferable to contain 50 to 75% by mass of the first zirconia powder and 25 to 50% by mass of the second zirconia powder for the purpose of increasing the toughness and the mechanical strength of the composite ceramic obtained by sintering.

Furthermore, in the present disclosure, 75 to 95% by mass of the zirconia powder containing the first and second zirconia powders, and 5 to 25% of the alumina powder are mixed and used. If the ratio of the alumina powder exceeds it, the fracture toughness value of the composite ceramic after sintering will decrease and the strength value will also decrease. On the contrary, if the ratio of the alumina powder is lower than it, the composite enhancing mechanism of alumina tends to be lost.

In this case, the mean particle sizes of the first and second zirconia powders and the alumina powder used are preferably 1 µm or less. If those having the mean particle size of 1 µm or less are used, the mean particle sizes of zirconia and alumina constituting the sintered composite ceramic are unlikely to be large. Preferably, each powder is made finer by wet grinding or other means, or when each powder is mixed, the powder particles are made finer by wet grinding or other means to set the mean particle sizes of the first and second zirconia powders and the alumina powder in the range of an appropriate mean diameter of 0.1 to 0.6 µm.

The purity of the zirconia powder such as the first and second zirconia powders and the alumina powder used in the present disclosure is preferably 99.9% or more.

Furthermore, in the present disclosure, it is desirable to add a zinc compound in the amount of 0.2 to 0.4 % by mass expressed in terms of zinc oxide when mixing with zirconia and alumina. The zinc compound may be added in the form of carbonates, nitrates, sulfates, organic compounds or the like. For example, it is desirable to add zinc oxide with a small ignition loss such that pores are not generated in the ceramic sintered body during sintering.

In this case, the particle size of the zinc compound is desirable to be 0.1 to 1.0 µm, preferably 0.1 to 0.5 µm. When the particle size of the zinc compound is 0.1 to 1.0 µm, zinc oxide is less likely to remain as a lump at the grain boundary part of zirconia or alumina during sintering, and the effect as a sintering aid is less likely to be impaired. The purity of the zinc compound used in the present disclosure is preferably 99.9% or more.

In the present disclosure, the molded body obtained in this way is sintered to obtain a ceramic sintered body. It does not require hot isostatic press sintering and can be sintered in an air atmosphere of 1450°C or less. This is because zinc oxide acts as a sintering aid when present in an appropriate amount, and it is desirable that sintering is conducted at a temperature of 1350 to 1450°C. When sintering at a temperature of 1450°C or less, grain growth of zirconia and alumina becomes gentler, and the mean crystal size is less likely to become larger than necessary. As a result, the zirconia is less likely to transition from tetragonal to monoclinic, and the toughness and the wear resistance are less likely to decrease. The lower limit of the sintering temperature is 1300°C or more, more preferably 1350°C or more, which is a temperature range in which zinc oxide enhances the sinterability as a sintering aid.

In the present disclosure, the zirconia powder used for adjusting the ceramic powder may be either obtained by mixing CeO₂, Y₂O₃, and zirconia powder in powder form and then calcining, or by mixing metallic salts or alkoxides of Ce, Y, and zirconia in a pH-adjusted aqueous solution (hereinafter, it may be referred to as a hydrolysis method). Powder synthesized by a hydrolysis method is preferable because it has a uniform particle size and more stable zirconia can be obtained.

### EXAMPLES

Hereinafter, the ceramic sintered body of the present disclosure will be described in detail with examples, but the present disclosure is not limited to the following examples.

First, zirconia powder prepared by a hydrolysis method, in which partially stabilized zirconia powder containing 10 mol% of CeO₂ (99.9% of purity, 0.5µm of particle size) and partially stabilized zirconia powder containing 2.0 mol% of Y₂O₃ (99.9% of purity, 0.5µm of particle size) were mixed to have the predetermined ratio shown in Table 1, alumina powder (99.9% of purity, 0.5µm of particle size) and zinc oxide (99.9% of purity, 0.2µm of particle size) were mixed to have the composition shown in Table 1. The mixing was carried out by using a wet ball mill for 24 hours with IPA (isopropyl alcohol) as a solvent, and using a high purity wear resistant alumina ball and a polyethylene container. Subsequently, ceramic sintered bodies (Samples Nos. 1 to 10) were manufactured by pressing and molding the ceramic powder obtained by drying, and sintering at 1350 to 1450°C for 2 hours in the air.

The crystal structure of the obtained ceramic sintered body was observed by using a transmission electron microscope. Specifically, Sample No. 1 was prepared by cutting the ceramic sintered body into a size which can be set in a sample chamber of the transmission electron microscope and suitable for transmission observation of an electron beam. This sample was set in the sample chamber of the transmission electron microscope, and the image formed by the transmission electron beam was observed. The results are shown in FIG. 2.

Next, the obtained ceramic sintered body was ground to prepare a sample of 4×3×35 mm. The density of the sintered body was measured by the Archimedes method. The bending strength was evaluated by three-point bending strength at room temperature according to JIS-R1601.

The Vickers hardness of the ceramic sintered body was evaluated by the Vickers hardness test method of JIS-R1610, and the fracture toughness value was evaluated by the IF method of JIS-R1607. Since the sintered body in the present disclosure has high strength and toughness, the indenter press-in pressure in each test was set to be 50 kgf (490 N). The results are shown in Table 1.

**[Table 1]**

| Sample | Ratio of zirconia/alumina phases in ceramic sintered bodv | | Ratio of various partially stabilized zirconia in zirconia phase | | Content of sintering aid | Sintered density (g/cm³) | Relative sintered density (%) | Vickers hardness (HV50) | Fracture toughness value (MPa·m^{0. 5}) | Bending strength (MPa) |
|---|---|---|---|---|---|---|---|---|---|---|
| | Zirconia phase : (% by mass) | Alumina phase (% by mass) | Partially stabilized zirconia of CeO₂ (% by mass) | Partially stabilized zirconia of Y₂O₃ (% by mass) | Zinc oxide (% by mass) | | | | | |
| 1 | 95 | 5 | 55 | 45 | 0. 3 | 6. 01 | 99. 71 | 1178 | 17. 8 | 1024 |
| 2 | 95 | 5 | 50 | 50 | 0. 3 | 6. 01 | 99. 87 | 1180 | 17. 0 | 1077 |
| 3 | 90 | 10 | 70 | 30 | 0. 3 | 5. 86 | 99. 40 | 1158 | 17. 8 | 1058 |
| 4 | 90 | 10 | 55 | 45 | 0. 3 | 5. 84 | 99. 50 | 1224 | 14. 5 | 1094 |
| 5 | 85 | 15 | 70 | 30 | 0. 3 | 5. 69 | 99. 09 | 1173 | 15. 0 | 1045 |
| 6 | 85 | 15 | 55 | 45 | 0. 3 | 5. 68 | 99. 32 | 1255 | 12. 1 | 1183 |
| 7 | 80 | 20 | 85 | 15 | 0. 3 | 5. 53 | 98. 43 | 1189 | 16. 4 | 980 |
| 8 | 80 | 20 | 70 | 30 | 0. 3 | 5. 51 | 98. 44 | 1227 | 14. 1 | 1011 |
| 9 | 75 | 25 | 70 | 30 | 0. 3 | 5. 33 | 97. 63 | 1236 | 12. 4 | 1038 |
| 10* | 70 | 30 | 85 | 15 | 0. 3 | 5. 15 | 96. 36 | 1126 | 12. 6 | 823 |

| | | | | | | | | | | |
|---|---|---|---|---|---|---|---|---|---|---|
| * Comparative Example in the present disclosure | | | | | | | | | | |

From Table 1, it can be seen that the ceramic sintered body of the present disclosure has high bending strength and high fracture toughness.

For the ceramic sintered bodies of Samples Nos. 1 to 10, composition concentrations of the grain boundary part and the central region part on the ceramic sintered body were measured by using an energy dispersive X-ray analysis of a scanning transmission electron microscope. For the measurements, NSS300E: an EDS analyzer manufactured by Thermo Scientific, was used, and as measurement conditions, an acceleration voltage was set to be 200 kV, and a measurement Livetime was set to be 50 sec.

FIG. 3 shows the content ratio of each element in Sample No. 1. Table 2 shows the content of Ce in the central region of the sintered body crystal and the content of Ce at the grain boundary part for each sample.

**[Table 2]**

| EDS measurement result showing content ratio of Ce elememnt (Concentration (% by mass)) | | | |
|---|---|---|---|
| Measurement point | Distance from point e (*µ*m) | Sample No. | |
| | | 1 | 10^{∗} |
| a | 0.28 | 7.7 | 6.5 |
| b | 0.13 | 7.9 | 6.6 |
| c | 0.06 | - | - |
| d | 0.03 | - | - |
| e | 0 | 10.2 | 7.1 |

| | | | |
|---|---|---|---|
| ^{∗} **Comparative Example in the present disclosure** | | | |

From the values in Tables 1 and 2, it can be seen that the ceramic sintered body having a larger content of Ce at the grain boundary part than in the central region of the sintered body crystal has high bending strength and high fracture toughness.

### Description of the Reference Numeral

- 1: ceramic sintered body
- 10: sintered body crystal
- 12: grain boundary part
- 14: alumina nanoparticle
- A: central region
- B: end part region

## Claims

1. A ceramic sintered body comprising:
zirconia as a main component,
a plurality of sintered body crystals and a grain boundary part located between the plurality of sintered body crystals, and
at least CeO₂, and
wherein a content of Ce is higher in the grain boundary part than in a central region of the sintered body crystal.

2. The ceramic sintered body according to claim 1, wherein the content of Ce of the sintered body crystal is larger in an end part region near the grain boundary part than in the central region of the sintered body crystal.

3. The ceramic sintered body according to claim 2, wherein there is a region in which the content of Ce of the grain boundary part gradually increases as it approaches the end part of the sintered body crystal.

4. The ceramic sintered body according to any one of claims 1 to 3, wherein the content of Ce in the grain boundary part is 8% by mass or more and 15% by mass or less.

5. The ceramic sintered body according to any one of claims 1 to 4, wherein at least one of the sintered body crystals includes alumina nanoparticle inside.

6. A ceramic sintered body comprising zirconia-based compound oxide containing 75 to 95% by mass of zirconia, 5 to 25% by mass of alumina, and 0.2 to 0.4% by mass of zinc oxide when the sum of the zirconia and the alumina is 100% by mass, and partially stabilized zirconia containing Y₂O₃ in which the zirconia is 1.5 to 2.8 mol% and partially stabilized zirconia containing 8 to 12 mol% of CeO₂, and wherein the ratio of the partially stabilized zirconia containing Y₂O₃ to the total amount of the zirconia is 15 to 50%.

7. A ceramic sintered body comprising zirconia-alumina composite oxide and zinc oxide as a sintering aid, wherein a sintered density is 97.6% or higher relative to the theoretical density when sintered at 1450°C under an atmospheric pressure.

8. The ceramic sintered body according to claim 6 or 7, wherein a fracture toughness value is 12.0 MPa·m^{0.5} or more by the IF method and 10.0 MPa·m^{0.5} or more by the SEVNB method.

9. The ceramic sintered body according to any one of claims 6 to 8, wherein the Vickers hardness HV50 is 1100 or more.

10. The ceramic sintered body according to any one of claims 6 to 9, wherein a bending strength value is 980 MPa or more at three-point bending fracture.

11. A knife comprising a blade body including the ceramic sintered body according to any one of claims 1 to 10.

12. A jig tool comprising a cutting part or a wear resistant part including the ceramic sintered body according to claims 1 to 10.

13. A ceramic powder comprising zirconia-based compound oxide containing 75 to 95% by mass of zirconia, 5 to 25% by mass of alumina, and 0.2 to 0.4% by mass of zinc oxide when the sum of the zirconia and the alumina is 100% by mass, and partially stabilized zirconia containing Y₂O₃ in which the zirconia is 1.5 to 2.8 mol% and partially stabilized zirconia containing 8 to 12 mol% of CeO₂, and wherein the ratio of the partially stabilized zirconia containing Y₂O₃ to the total amount of the zirconia is 15 to 50%.
